# FASCICULE DE BREVET EUROPEEN

(11) **EP 2 094 616 B1**
(45) Date de publication et mention de la délivrance du brevet: **01.03.2017**
(21) Numéro de dépôt: 07823797.1
(22) Date de dépôt: 10.09.2007
(51) Int. Cl.: C03C 13/06, C03C 13/00, C03C 3/078, C03C 3/087

(54) **COMPOSITIONS POUR LAINES MINERALES**
ZUSAMMENSETZUNG FÜR MINERALWOLLEN
COMPOSITIONS FOR MINERAL WOOLS

(30) Priorité: 13.09.2006 FR 0653717
(43) Date de publication de la demande: 02.09.2009
(73) Titulaire: SAINT-GOBAIN ISOVER, 92400 Courbevoie (FR)
(72) Inventeur: LECOMTE, Emmanuel, F-93600 Aulnay-sous-Bois (FR); LEFRERE, Yannick, F-92240 Malakoff (FR)
(74) Mandataire: Saint-Gobain Recherche
(86) Numéro de dépôt international: PCT/FR2007/051901
(87) Numéro de publication internationale: WO 2008/031979

(56) Documents cités:
- EP-A1- 0 516 354
- EP-A1- 1 338 575
- WO-A-96/21628
- FR-A- 2 335 461

## Description

La présente invention concerne le domaine des laines minérales présentant une forte vitesse de dissolution en milieu physiologique. Elle concerne plus particulièrement de nouvelles compositions de verre aptes à former des laines de verre pour l'isolation thermique et/ou acoustique ou pour substrats de culture hors-sol.

Une laine minérale (laine de verre ou de roche) est caractérisée par un enchevêtrement de fibres discontinues, ce qui la distingue de fibres continues généralement destinées au renfort de matières organiques ou inorganiques (par exemple le ciment). Cette structure particulière, à l'origine des performances isolantes, peut être obtenue par différents procédés de fibrage, tels que les procédés de centrifugation interne (ayant recours à des centrifugeurs (« assiettes ») tournant à grande vitesse et percés d'orifices) ou externe (à l'aide de rotors pleins tournant à grande vitesse et sur la surface externe desquels le verre fondu est projeté), ou les procédés d'atténuation par un gaz chaud ou par une flamme.

Les fibres de laines minérales sont susceptibles, lorsque certains critères géométriques en terme de diamètre et/ou longueur sont respectés, de s'introduire par inhalation dans l'organisme et notamment dans les poumons, parfois jusqu'aux alvéoles pulmonaires. Pour éviter tout risque pathogène lié à une éventuelle accumulation de fibres dans l'organisme, il est apparu nécessaire de veiller à ce que les fibres présentent une faible « biopersistance », c'est-à-dire puissent être aisément et rapidement éliminées de l'organisme. La composition chimique des fibres est un paramètre majeur influençant cette capacité à être éliminées rapidement de l'organisme, car elle joue un rôle considérable sur la vitesse de dissolution des fibres en milieu physiologique. Des fibres minérales présentant de fortes vitesses de dissolution en milieu physiologique (« biosolubles ») ont donc été formulées et décrites dans l'art antérieur.

La principale difficulté consiste toutefois à augmenter la vitesse de dissolution des fibres en milieu physiologique tout en conservant une faisabilité industrielle, et notamment une bonne aptitude à être fibrées, ainsi que les bonnes propriétés d'usage du produit fini. Parmi les propriétés influençant la faisabilité industrielle figurent au premier plan la viscosité et les propriétés de dévitrification (température de liquidus et vitesses de cristallisation). Les propriétés d'usage les plus importantes sont la résistance mécanique (principalement le module de Young ou module élastique et la ténacité), la résistance aux températures élevées et la résistance à l'humidité ou résistance hydrolytique. Ce dernier point est particulièrement crucial et délicat, car les deux critères de résistance hydrolytique et de biosolubilité sont à de nombreux égards contradictoires puisqu'ils concernent tous les deux la capacité à se dissoudre dans un milieu majoritairement aqueux.

Les compositions de laines de verre contiennent habituellement de l'oxyde de bore dans des teneurs de l'ordre de 4 à 6%. L'oxyde de bore est en effet un élément favorable à un grand nombre de propriétés des laines minérales. En particulier, il accroît assez considérablement la biosolubilité des fibres, permet d'améliorer les propriétés de fusion du verre et de fibrage par son action de diminution de la viscosité à haute température et de la température au liquidus, ainsi que les propriétés d'isolation thermique des laines minérale en diminuant la composante radiative de la conductivité thermique des fibres.

L'oxyde de bore n'est toutefois pas dépourvu d'inconvénients, en particulier du fait de sa volatilité importante et de son coût élevé. Lorsque le verre à fibrer est fondu dans un four à flammes, les envols de bore sont tels qu'il est nécessaire de prévoir des installations de dépollution des fumées. En outre, il est apparu que dans un four muni de récupérateurs ou régénérateurs de chaleur constitués d'empilements de pièces en céramiques réfractaires, les envols de bore corrodaient ces pièces en céramiques, nécessitant un remplacement plus fréquent.

Les documents EP 0 516 354 et EP 1 338 575 décrivent des compositions de laines minérales sans oxyde de bore mais dont les teneurs en oxydes d'alcalin sont faibles.

L'invention a donc pour but de proposer de nouvelles compositions de verre pouvant être fondues en four à flammes sans nécessiter d'installations de dépollution des fumées et sans occasionner une diminution de la durée de vie des récupérateurs ou régénérateurs de chaleur, lesdites compositions étant néanmoins aptes à former des laines minérales présentant de fortes vitesses de dissolution en milieu physiologique et une résistance hydrolytique satisfaisante, ainsi qu'une bonne capacité à être fibrées.

L'invention a pour objet des laines minérales dont les fibres de verre présentent une composition chimique sensiblement dépourvue d'oxyde de bore et comprenant les constituants suivants dans les limites définies ci-après exprimées en pourcentages pondéraux :

| | |
|---|---|
| SiO₂ | 60 à 75 |
| Al₂O₃ | 0 à 4 |
| Na₂O | 17 à 22 |
| CaO | 5 à 15 |
| Fe₂O₃ | 0 à 2 |
| P₂O₅ | 0 à 3 |

Par « sensiblement dépourvue d'oxyde de bore » au sens de la présente invention, il faut entendre que les compositions peuvent comprendre de faibles quantités d'oxyde de bore en tant qu'impuretés. Il peut s'agir en particulier d'impuretés apportées par certaines matières premières telles que des déchets fibreux. D'une manière générale, la composition des laines minérales selon l'invention contient moins de 0,5% d'oxyde de bore, de préférence moins de 0,3% et, de manière encore plus préférée, ne contient pas d'oxyde de bore en quantités décelables par les techniques d'analyse couramment employées dans le domaine des laines minérales.

La silice (SiO₂) est un oxyde formateur du réseau vitreux, et joue un rôle essentiel pour sa stabilité, tant thermique que chimique. Dans le cadre des limites définies précédemment, un pourcentage en silice inférieur à 60% conduirait à une viscosité trop faible, une trop forte capacité à dévitrifier (c'est-à-dire à cristalliser) pendant l'étape de fibrage, et une résistance hydrolytique amoindrie. Au contraire, une teneur trop élevée, supérieure à 75%, engendrerait une viscosité trop élevée et par conséquent des difficultés aux stades de la fusion et du fibrage des verres. La teneur en silice est également limitée car cet oxyde s'est révélé préjudiciable à la biosolubilité. La teneur en silice est donc avantageusement supérieure ou égale à 62%, voire 63% et même 64% et/ou inférieure ou égale à 68%, voire 67% et même 66% ou 65%.

L'alumine (Al₂O₃) joue un rôle particulièrement important dans le cadre de la présente invention. En tant qu'élément formateur de réseau cet oxyde joue un rôle primordial sur la stabilité thermique et la résistance mécanique. Compte tenu de son influence bénéfique sur la résistance hydrolytique et de son influence néfaste sur la viscosité du verre et la biosolubilité, sa teneur est de préférence inférieure ou égale à 3%, voire 2,5% ou même 2% ou 1,5% et/ou supérieure ou égale à 0,5%.

La somme des teneurs en silice et alumine (SiO₂+Al₂O₃) est avantageusement limitée pour assurer une bonne résistance hydrolytique, une faible viscosité et une forte biosolubilité. La somme SiO₂+Al₂O₃ est donc de préférence inférieure ou égale à 70%, voire 69% et même 68% ou 67%, ou encore 66%.

Les oxydes alcalins, et en particulier l'oxyde de sodium (Na₂O) jouent un rôle de modificateur du réseau vitreux, c'est-à-dire qu'ils s'insèrent dans la structure vitreuse en rompant certaines liaisons covalentes réalisées entre les éléments formateurs du réseau. Leur effet dans la présente invention est, à l'instar de l'alumine, multiple. L'oxyde de sodium possède un rôle de fluidifiant et permet donc de diminuer la viscosité du verre, facilitant le formage, des températures de fibrage trop élevées diminuant drastiquement la durée de vie des organes de fibrage. Pour cette raison, la teneur en oxyde de sodium ne doit pas être inférieure à 17%, et est avantageusement supérieure ou égale à 17,5%, voire 18% ou 18,5% et même 19%. Son rôle est toutefois négatif sur la résistance hydrolytique, et sa teneur doit donc être inférieure ou égale à 22%, préférentiellement inférieure ou égale à 21% et même à 20%. Les verres obtenus présentent toutefois une résistance hydrolytique convenable, ce qui est particulièrement étonnant et inattendu eu égard à leurs très fortes teneurs en oxydes alcalins, et particulièrement en oxyde de sodium. L'oxyde de potassium peut également être introduit dans la composition des laines minérales selon l'invention, la plupart du temps sous forme d'impuretés, généralement à des teneurs inférieures ou égales à 2% en poids, voire 1%.

Les oxydes alcalino-terreux, principalement CaO et MgO, jouent également le rôle de modificateurs du réseau vitreux. Leur présence est bénéfique sur les propriétés de biosolubilité et de résistance hydrolytique (pour cette dernière propriété, en comparaison avec l'oxyde de sodium). L'oxyde de calcium (CaO) permet de diminuer avantageusement la viscosité du verre à haute température et donc d'améliorer la fusion, mais de fortes teneurs conduisent à une dégradation de la résistance à la dévitrification. La teneur en CaO est donc de préférence supérieure ou égale à 6%, voire 7% et même 8% ou 8,5% et/ou inférieure ou égale à 13%, voire 12% ou même 11%. L'oxyde de magnésium (MgO) peut être ajouté, en une teneur supérieure ou égale à 1%, voire 2%. Compte tenu de son influence néfaste sur la dévitrification du verre, la teneur en MgO est de préférence inférieure ou égale à 5%, voire 4% et même 3%.

Le rapport R défini par le rapport entre la teneur en Na₂O la teneur en CaO (R = Na₂O/CaO est de préférence supérieur ou égal à 2, voire à 2,1 et même 2,2. Il est en effet apparu aux inventeurs que ce rapport influençait grandement la température de liquidus en favorisant ou non la cristallisation en dévitrite plutôt qu'en wollastonite. Un rapport R supérieur ou égal à 2 permet ainsi d'obtenir un verre dont la température de liquidus est faible, notamment moins de 1000°C, voire moins de 950°C. Ces verres peuvent ainsi être fibrés à faible température, limitant le vieillissement des organes de fibrage et le coût énergétique.

L'oxyde de fer (Fe₂O₃) est limité à une teneur inférieure ou égale à 3%, de préférence 2% et même 1% du fait de son rôle négatif sur la coloration du verre, sur la faculté du verre à dévitrifier et sur la biosolubilité des fibres. L'oxyde de fer est de préférence présent sous forme d'impuretés uniquement, généralement dans des teneurs inférieures ou égales à 0,5%, voire 0,2%.

L'oxyde de phosphore (P₂O₅) peut être avantageusement utilisé, notamment du fait de son rôle bénéfique sur la biosolubilité. Sa teneur est toutefois avantageusement limitée à 2%, voire 1,5%. Compte tenu de son coût et de son influence négative sur la viscosité du verre, les verres selon l'invention ne contiennent de préférence pas d'oxyde de phosphore, excepté d'inévitables traces provenant des matières premières.

La composition des laines minérales selon l'invention est de préférence telle que la grandeur « SiO₂ + 2Al₂O₃ - 2P₂O₅ » est inférieure ou égale à 68%, ces teneurs étant dans ce cas exprimées en pourcentages molaires. De préférence, « SiO₂ + 2Al₂O₃ - 2P₂O₅ » est inférieur ou égal à 66%. Le respect d'un tel critère permet en effet d'optimiser les propriétés de biosolubilité des fibres.

Des oxydes alcalino-terreux tels que BaO (oxyde de baryum), SrO (oxyde de strontium), et/ou alcalins tels que Li₂O (oxyde de lithium) peuvent être volontairement inclus dans les fibres selon l'invention. En particulier, l'oxyde de strontium s'est révélé particulièrement avantageux en substitution de SiO₂, Na₂O et CaO pour améliorer à la fois la biosolubilité des fibres et la résistance hydrolytique des verres. La composition des laines minérales selon l'invention contient donc de préférence au moins 0,5%, voire 1%, et même 2% ou 3% de SrO, la teneur en SrO étant de préférence limitée à 6% ou moins, voire 5% ou moins pour des raisons de coût.

Les fibres des laines minérales selon l'invention peuvent également contenir d'autres oxydes que ceux précédemment cités, en une teneur massique ne dépassant généralement pas 3%, voire 2% et même 1%. Parmi ces oxydes figurent les impuretés communément apportées par les matières premières naturelles ou artificielles (par exemple le verre recyclé, appelé calcin) utilisées dans ce type d'industrie (parmi les plus courantes figurent TiO₂, MnO ...). Des impuretés telles que ZrO₂ sont également couramment apportées par la dissolution partielle dans le verre d'éléments chimiques provenant des matériaux réfractaires servant à la construction des fours. Certaines traces proviennent encore des composés employés pour l'affinage du verre : on citera en particulier l'oxyde de soufre SO₃ très couramment employé. Ces divers oxydes, du fait de leur faible teneur, ne jouent en tout état de cause aucun rôle fonctionnel particulier pouvant modifier la manière dont les fibres selon l'invention répondent au problème posé.

Les laines minérales selon l'invention sont de préférence obtenues par un procédé de centrifugation interne, c'est-à-dire en ayant recours à des centrifugeurs (« assiettes ») tournant à grande vitesse et percés d'orifices.

Compte tenu des contraintes associés à ce procédé, il est préférable que la température de liquidus des verres selon l'invention, qui fixe la limite de température inférieure à laquelle il est possible de fibrer le verre, soit inférieure à 1150°C, notamment inférieure à 1100°C, voire à 1050°C, et même 1000°C ou 950°C. Des températures plus élevées impliqueraient en effet une limitation inacceptable de la durée de vie des assiettes de fibrage, voire une modification des matériaux constitutifs desdites assiettes. Afin d'obtenir des fibres de bonne qualité et d'assurer une bonne marche des installations, la marge de formage, c'est-à-dire la différence entre la température à laquelle la viscosité du verre est de 1000 poises et la température de liquidus est de préférence supérieure ou égale à 0, et avantageusement supérieure ou égale à 10°C, notamment à 25°C, voire à 50°C et même à 100°C.

Les laines de verre selon l'invention présentent de préférence des valeurs de dissolution DGG (mesure de la résistance hydrolytique) inférieures ou égales à 50mg/g, notamment inférieures ou égales à 45mg/g, voire 40mg/g et même 35mg/g ou 30mg/g. L'obtention de valeurs aussi faibles est particulièrement surprenante compte tenu de la teneur élevée en Na₂O.

L'invention a encore pour objet des produits d'isolation thermique et/ou acoustique comprenant les laines minérales selon l'invention.

L'invention a également pour objet un procédé de fabrication des laines minérales selon l'invention, procédé du type « centrifugation interne », c'est-à-dire ayant recours à des centrifugeurs tournant à grande vitesse et percés d'orifices, les fibres obtenues étant ensuite étirées par un jet gazeux.

L'invention a enfin pour objet l'utilisation des laines minérales selon l'invention en tant que matériaux d'isolation thermique et/ou acoustique ou substrats de culture hors sol.

Les avantages présentés par les laines minérales selon l'invention seront mieux appréciés à travers les exemples suivants, illustrant la présente invention sans toutefois la limiter.

Les tableaux 1 et 2 rassemblent des compositions de verre selon l'invention ainsi que leurs propriétés. L'exemple comparatif C1 est un verre contenant de l'oxyde de bore représentatif des compositions de laines de verre industriellement exploitées.

La composition des verres est exprimée en pourcentages massiques d'oxydes. Les impuretés inévitables provenant des matières premières, des agents affinants ou des matériaux réfractaires du four, dont certaines ne sont du reste pas analysées, n'ont été transcrites que dans leur teneur totale. Il est bien apparent pour l'homme du métier que ces impuretés, présentes à des teneurs généralement inférieures à 1%, voire à 0,5% dans les exemples qui suivent, ne jouent aucun rôle fonctionnel dans le cadre de la présente invention.

Afin d'illustrer les avantages des compositions de verre selon l'invention, les tableaux présentent les propriétés fondamentales suivantes :
- la température correspondant à une viscosité de 10³ poises, notée « Tlog3 » et exprimée en degrés Celsius, correspondant à la température de fibrage,
- la température au liquidus, notée « Tliq » et exprimée en degrés Celsius,
- la valeur de dissolution « DGG », notée « DGG » : selon cette méthode on plonge une poudre de verre ayant une granulométrie de 360 à 400 micromètres dans de l'eau chauffée à reflux pendant 5 heures. Après un refroidissement rapide, on filtre le mélange et l'on effectue une mesure de matière sèche contenue dans le filtrat. La valeur de dissolution « DGG » exprime la quantité de matière dissoute exprimée en milligrammes par 10 grammes de verre traité,
- la vitesse de dissolution (« biosolubilité ») en milieu neutre, notée « kSiO₂ », représentant la vitesse de dissolution de fibres d'un diamètre de 10 micromètres laissées 7 jours en solution saline statique tamponnée à un pH de 7,4 assuré par un bullage direct d'un mélange N₂ / CO₂ (90/10) associé à l'ajout de NaHCO₃ (2.7 g/l) dans la solution. La solution saline contient, en plus du tampon pH, du chlorure de sodium et du citrate de sodium dans des concentrations respectives de 6,6 g/L et 0,15 g/L, le rapport entre la surface de verre exposée et le volume de la solution d'attaque étant de 0,5 cm⁻¹. Cette vitesse de dissolution, exprimée en ng/cm².h, exprime la quantité de verre dissoute par unités de surface de fibres et de temps.

**Tableau 1**

| | **C1** | **1** | **2** | **3** | **4** | **5** | **6** | **7** |
|---|---|---|---|---|---|---|---|---|
| SiO₂ (%) | 65,0 | 64,6 | 65,7 | 67,7 | 66,0 | 65,7 | 64,0 | 65,7 |
| Al₂O₃ (%) | 2,0 | 1,95 | 1,0 | 2,0 | 1,3 | 0,9 | 0,2 | 2,5 |
| B₂O₃ (%) | 4,5 | | | | | | | |
| Fe₂O₃ (%) | 0,2 | | | 0,13 | 0,13 | 0,13 | 0,13 | 0,13 |
| CaO (%) | 8,0 | 10,8 | 10,8 | 8,4 | 9,6 | 7,95 | 9,15 | 7,95 |
| MgO (%) | 2,8 | 3,4 | 4,3 | 2,4 | 2,4 | 2,95 | 2,95 | 2,95 |
| Na₂O (%) | 16,0 | 17,8 | 17,0 | 18,8 | 20,0 | 17,8 | 19,0 | 17,8 |
| K₂O (%) | 0,8 | | | 0,3 | 0,3 | 0,3 | 0,3 | 0,3 |
| P₂O₅ (%) | | 1,0 | 1,0 | | | | | |
| SrO (%) | | | | | | 4,0 | 4,0 | 2,4 |
| Impuretés (%) | 0,7 | 0,45 | 0,2 | 0,3 | 0,3 | 0,3 | 0,3 | 0,3 |
| Tlog3 (°C) | 1073 | 1089 | 1097 | | | 1099 | | 1116 |
| Tliq (°C) | 890 | 1000 | 1000 | | | 960 | | 960 |
| DGG (mg/g) | 27 | 28 | 29 | | | | | 28 |
| kSiO₂ (ng/cm².h) | 200 | 495 | 660 | 120 | 270 | 370 | 850 | 210 |

**Tableau 2**

| | **8** | **9** | **10** | **11** | **12** | **13** | **14** | **15** |
|---|---|---|---|---|---|---|---|---|
| SiO₂ (%) | 64,0 | 65,9 | 64,0 | 65,0 | 68,8 | 65,7 | 64,8 | 64,8 |
| Al₂O₃ (%) | 1,3 | 2,5 | 1,3 | 2,9 | 2,3 | 2,2 | 1,0 | 1,0 |
| B₂O₃ (%) | | | | | | | | |
| Fe₂O₃ (%) | 0,13 | | | | 0,1 | 0,1 | 0,1 | |
| CaO (%) | 9,15 | 8,8 | 10,0 | 8,8 | 8,5 | 10,4 | 10,7 | 13,9 |
| MgO (%) | 2,95 | 3,4 | 3,5 | 3,4 | 2,6 | 2,5 | 3,4 | 0,1 |
| Na₂O (%) | 19,0 | 19,1 | 20,5 | 18,7 | 17,1 | 18,6 | 18,6 | 18,7 |
| K₂O (%) | 0,3 | 0,3 | 0,3 | 0,3 | 0,7 | 0,6 | 0,3 | 0,3 |
| P₂O₅ (%) | | | | 0,7 | | | 1,1 | 1,1 |
| SrO (%) | 2,9 | | | | | | | |
| Impuretés (%) | 0,3 | 0,1 | 0,3 | 0,2 | | | 0,1 | 0,1 |
| Tlog3 (°C) | | 1103 | 1062 | 1107 | | | | |
| Tliq (°C) | | 950 | | 950 | 960 | 980 | 970 | 1030 |
| DGG (mg/g) | | 33 | | 33 | 29 | 33 | 34 | 32 |
| kSiO₂ (ng/cm².h) | 475 | 135 | 430 | 140 | 105 | 180 | 640 | |

Les exemples présentés démontrent qu'il est possible d'obtenir des laines minérales dont les fibres sont dépourvues d'oxyde de bore et qui combinent néanmoins de bonnes performances en termes de résistance hydrolytique et de biosolubilité. La résistance hydrolytique des laines minérales selon l'invention est en particulier étonnamment faible au regard de l'augmentation importante de la teneur en oxydes alcalins. La biosolubilité est quant à elle en général améliorée malgré l'absence d'oxyde de bore : ce point est également surprenant car une forte augmentation de la biosolubilité s'accompagne en général d'une baisse de la résistance hydrolytique dans des proportions voisines. Il n'en est rien dans le cas des verres selon l'invention, pour lesquels le choix particulier des constituants et de leurs teneurs permet d'obtenir une biosolubilité accrue pour une résistance hydrolytique équivalente.

## Revendications

1. Laine minérale dont les fibres de verre présentent une composition chimique sensiblement dépourvue d'oxyde de bore et comprenant les constituants suivants dans les limites définies ci-après exprimées en pourcentages pondéraux :
| | |
|---|---|
| SiO₂ | 60 à 75 |
| Al₂O₃ | 0 à 4 |
| Na₂O | 17 à 22 |
| CaO | 5 à 15 |
| Fe₂O₃ | 0 à 2 |
| P₂O₅ | 0 à 3 |

2. Laine minérale selon la revendication 1, telle que la composition chimique de ses fibres comprend également les constituants suivants dans les limites définies ci-après exprimées en pourcentages pondéraux :
| | |
|---|---|
| MgO | 0 à 5 |
| SrO | 0 à 6 |

3. Laine minérale selon l'une des revendications précédentes, telle que la teneur en silice (SiO₂) est supérieure ou égale à 62%, notamment 63% ou 64% et/ou inférieure ou égale à 68%, notamment 67% et de préférence 66% ou 65%.

4. Laine minérale selon l'une des revendications précédentes, telle que la teneur en alumine (Al₂O₃) est inférieure ou égale à 3%, notamment 2,5%, de préférence 2% ou 1,5% et/ou supérieure ou égale à 0,5%.

5. Laine minérale selon l'une des revendications précédentes, telle que la somme des teneurs en silice et alumine (SiO₂+Al₂O₃) est inférieure ou égale à 70%, notamment 69% ou 68% et de préférence 67% ou 66%.

6. Laine minérale selon l'une des revendications précédentes, telle que la grandeur « SiO₂ + 2Al₂O₃ - 2P₂O₅ » est inférieure ou égale à 68%, notamment 66%, les teneurs étant exprimées en pourcentages molaires.

7. Laine minérale selon l'une des revendications précédentes, telle que la teneur en oxyde de sodium (Na₂O) est supérieure ou égale à 17,5%, notamment 18% ou 18,5% et de préférence 19% et/ou inférieure ou égale à 22%, préférentiellement 21% et notamment 20%.

8. Laine minérale selon l'une des revendications précédentes, telle que la teneur en oxyde de calcium (CaO) est supérieure ou égale à 6%, notamment 7% ou 8%, de préférence 8,5% et/ou inférieure ou égale à 13%, notamment 12% ou 11%.

9. Laine minérale selon l'une des revendications précédentes, telle que le rapport Na₂O/CaO est supérieur ou égal à 2, notamment 2,1 ou 2,2.

10. Laine minérale selon l'une des revendications précédentes, telle que la teneur en oxyde de magnésium (MgO) est supérieure ou égale à 1%, notamment 2% et/ou inférieure ou égale à 5%, notamment 4% ou 3%.

11. Laine minérale selon l'une des revendications précédentes, telle que la teneur en oxyde de fer (Fe₂O₃) est inférieure ou égale à 0,5%.

12. Utilisation des laines minérales selon l'une des revendications 1 à 11 en tant que matériaux d'isolation thermique et/ou acoustique ou substrats de culture hors sol.

## Patentansprüche

1. Mineralwolle deren Glasfasern eine im Wesentlichen boroxidfreie chemische Zusammensetzung aufweisen und die folgenden Bestandteile in den angegebenen Grenzen in Massenprozent enthält:
| | |
|---|---|
| SiO₂ | 60 bis 75 |
| Al₂O₃ | 0 bis 4 |
| Na₂O | 17 bis 22 |
| CaO | 5 bis 15 |
| Fe₂O₃ | 0 bis 2 |
| P₂O₅ | 0 bis 3 |

2. Mineralwolle nach Anspruch 1, wobei die chemische Zusammensetzung ihrer Fasern weiterhin die folgenden Bestandteile in den angegebenen Grenzen in Massenprozent enthält:
| | |
|---|---|
| MgO | 0 bis 5 |
| SrO | 0 bis 6 |

3. Mineralwolle nach einem der vorherigen Ansprüche, wobei der Siliziumdioxid (SiO₂)-Gehalt größer oder gleich 62%, insbesondere 63% oder 64% und/oder kleiner oder gleich 68%, insbesondere 67% und vorzugsweise 66% oder 65% ist.

4. Mineralwolle nach einem der vorherigen Ansprüche, wobei der Aluminiumoxid (Al₂O₃)-Gehalt kleiner oder gleich 3%, insbesondere 2,5%, vorzugsweise 2% oder 1,5% und/oder größer oder gleich 0,5% ist.

5. Mineralwolle nach einem der vorherigen Ansprüche, wobei der Siliziumdioxid und Aluminiumoxid (SiO₂ + Al₂O₃)-Summengehalt kleiner oder gleich 70%, insbesondere 69% oder 68%, und vorzugsweise 67% oder 66% ist.

6. Mineralwolle nach einem der vorherigen Ansprüche, wobei die Größe "SiO₂+ 2 Al₂O₃ - 2 P₂O₅" kleiner oder gleich 68%, insbesondere 66% ist, und die Bestandteile in Molprozent angegeben sind.

7. Mineralwolle nach einem der vorherigen Ansprüche, wobei der Natriumoxid (Na₂O)-Gehalt größer oder gleich 17,5%, insbesondere 18% oder 18,5%, und vorzugsweise 19% und/oder kleiner oder gleich 22%, bevorzugt 21% und insbesondere 20% ist.

8. Mineralwolle nach einem der vorherigen Ansprüche, wobei der Kalziumoxid (CaO)-Gehalt größer oder gleich 6%, insbesondere 7 oder 8%, und vorzugsweise 8,5% und/oder kleiner oder gleich 13%, insbesondere 12% oder 11% ist.

9. Mineralwolle nach einem der vorherigen Ansprüche, wobei das Verhältnis Na₂O/CaO größer oder gleich 2, insbesondere 2,1 oder 2,2 ist.

10. Mineralwolle nach einem der vorherigen Ansprüche, wobei der Magnesiumoxid (MgO)-Gehalt größer oder gleich 1%, insbesondere 2% und/oder kleiner oder gleich 5%, insbesondere 4% oder 3% ist.

11. Mineralwolle nach einem der vorherigen Ansprüche, wobei der Eisenoxid (Fe₂O₃)-Gehalt kleiner oder gleich 0,5% ist.

12. Verwendung von Mineralwolle nach einem der Ansprüche 1 bis 12 als Wärme- und/oder Schall-Dämmmaterial oder als erdfreies Pflanzsubstrat.

## Claims

1. A mineral wool, the glass fibers of which have a chemical composition substantially free of boron oxide and that comprises the following constituents within the limits defined below expressed as percentages by weight:
| | |
|---|---|
| SiO₂ | 60 to 75 |
| Al₂O₃ | 0 to 4 |
| Na₂O | 17 to 22 |
| CaO | 5 to 15 |
| Fe₂O₃ | 0 to 2 |
| P₂O₅ | 0 to 3. |

2. The mineral wool as claimed in claim 1, such that the chemical composition of its fibers also comprises the following constituents within the limits defined below expressed as percentages by weight:
| | |
|---|---|
| MgO | 0 to 5 |
| SrO | 0 to 6. |

3. The mineral wool as claimed in one of the preceding claims, such that the silica (SiO₂) content is greater than or equal to 62%, in particular 63% or 64% and/or less than or equal to 68%, in particular 67% and preferably 66% or 65%.

4. The mineral wool as claimed in one of the preceding claims, such that the alumina (Al₂O₃) content is less than or equal to 3%, in particular 2.5%, preferably 2% or 1.5% and/or greater than or equal to 0.5%.

5. The mineral wool as claimed in one of the preceding claims, such that the sum of the silica and alumina (SiO₂+Al₂O₃) contents is less than or equal to 70%, in particular 69% or 68% and preferably 67% or 66%.

6. The mineral wool as claimed in one of the preceding claims, such that the quantity "SiO₂ + 2Al₂O₃ - 2P₂O₅" is less than or equal to 68%, in particular 66%, the contents being expressed as molar percentages.

7. The mineral wool as claimed in one of the preceding claims, such that the sodium oxide (Na₂O) content is greater than or equal to 17.5%, in particular 18% or 18.5% and preferably 19% and/or less than or equal to 22%, preferably 21% and in particular 20%.

8. The mineral wool as claimed in one of the preceding claims, such that the calcium oxide (CaO) content is greater than or equal to 6%, in particular 7% or 8%, preferably 8.5% and/or less than or equal to 13%, in particular 12% or 11%.

9. The mineral wool as claimed in one of the preceding claims, such that the Na₂O/CaO ratio is greater than or equal to 2, in particular 2.1 or 2.2.

10. The mineral wool as claimed in one of the preceding claims, such that the magnesium oxide (MgO) content is greater than or equal to 1%, in particular 2% and/or less than or equal to 5%, in particular 4% or 3%.

11. The mineral wool as claimed in one of the preceding claims, such that the iron oxide (Fe₂O₃) content is less than or equal to 0.5%.

12. The use of the mineral wools as claimed in one of claims 1 to 11 as thermal and/or acoustic insulation materials or substrates for soilless cultivation.
